# EUROPEAN PATENT APPLICATION

(11) **EP 2 341 636 A2**
(43) Date of publication of application: **06.07.2011**
(21) Application number: 10016150.4
(22) Date of filing: 29.12.2010
(51) Int. Cl.: H04B 3/56

(54) **Computer power supply with networking functions**

(30) Priority: 29.12.2009 US 290613 P
(71) Applicant: COPPERGATE COMMUNICATION LTD., 69710 Tel Aviv (IL)
(72) Inventor: Baum, David, Ramat Gan 52425 (IL)
(74) Representative: Schuhmann, Albrecht

(57) **Abstract**

Power supply, installed within a computer, for enabling signals to be transmitted and received between the computer and at least one electrical device external to the power supply, the power supply including an electrical interface, at least one power cable, a low pass filter, a power line modem, an AC to DC converter and a DC to DC converter, the low pass filter being coupled with the electrical interface via a first one of the power cables, the power line modem being coupled with the first one of the power cables via a second one of the power cables and with a motherboard of the computer, the AC to DC converter being coupled with the low pass filter and the DC to DC converter being coupled with the AC to DC converter, the power line modem and the motherboard, the electrical interface for coupling the power supply with an electrical socket and for receiving high voltage AC electricity, the power line modem for modulating and demodulating over power lines the signals to be transmitted and received between the computer and the electrical device, the AC to DC converter for transforming the high voltage AC electricity to DC electricity and the DC to DC converter for converting the DC electricity to low voltage DC electricity and for powering the power line modem, wherein the low pass filter is for substantially eliminating noise on the first one of the power cables and the second one of the power cables caused by the AC to DC converter and the DC to DC converter.

## Description

### FIELD OF THE DISCLOSED TECHNIQUE

The disclosed technique relates to power line networking, in general, and to methods and systems for providing power line networking functions via a computer's power supply, in particular.

### BACKGROUND OF THE DISCLOSED TECHNIQUE

Power line networking refers to methods and systems for connecting computers and other electrical devices together via power lines such that they can communicate with one another. Power line networking is used in homes and other locations where the introduction of new wires, such as Ethernet wires, for enabling connectivity between electrical devices is cumbersome and expensive. Various products exist, such as modems, routers and switches, for enabling electrical devices, most notably personal computers (herein abbreviated PC), to communicate with one another over the power lines of a residence. A residence can include a residential home, business, office building and the like. Networking specifications, such as HomePlug 1.0 and HomePlug AV, have been around for some time, which have established standards of communication over power lines.

In general, power line networking devices for use with PCs are located external to the PCs. In such a configuration, a PC is connected to the power line network via the external power line network device, such as a router or bridge, using a standard connector, such as an Ethernet connector. In some prior art systems, the power supply of the PC has been modified to enable networking capabilities and the establishment of a power line network via the PC's power supply. It is noted that power lines can also be used to provide internet access to PCs, known in the art as broadband over power lines (herein abbreviated as BPL).

US Patent No. 6,373,377 to Sacca, et al., entitled "Power supply with digital data coupling for power-line networking" is directed towards a power supply for providing digital data coupling for power line networking. The power supply includes a digital interface to transmit and receive data in digital format. The data is passed through a digital coupler to and from a power line network access circuitry interface. The power supply further includes a digital-to-analog converter to process digital data into a high-frequency analog data carrier, which is provided to a power line of a power line network. An analog-to-digital converter in the power supply converts a high-frequency analog data carrier from the power line into digital data for the power line network access circuitry interface. A power line analog front end of the power supply transmits and receives the high-frequency analog data carrier to and from the power line. Digital data exchanged between the power supply and the network access circuitry interface may include control signals for a control circuitry of the power supply. Control circuitry of the power supply may handle control of the digital-to-analog converter, the analog-to-digital converter and the analog front end.

US Patent No. 6,972,688 to Rapaich, entitled "Power supply with modular integrated networking" is directed towards a power supply capable of receiving a module having a power line networking adapter. The module may fit into the power supply through an opening in the power supply's case or may be attached to the surface of the power supply's case by fastening means. The power line network module can be added after receiving a customer order or at any time the power line networking option is desired. With insertion of the module, the power supply becomes a standalone, self-contained device that handles communication with the power line and is subject to Federal Communications Commission (FCC) compliance. In another embodiment of the invention of Rapaich, the power line networking module may be attached to the outside of the power supply and connected to power and the AC line through a connector. In this embodiment, the power line networking module may need to be encapsulated to reduce the risk of electrical shock and to shield it from undesired emissions. The module may be held in place by the friction of the connector or may have additional fasteners. The power line network adapter may be upgraded without replacing the entire power supply. According to the invention of Rapaich, the upgrade could be accomplished by removing the existing power line networking module and inserting a new power line networking module. In another embodiment of this invention, all power line networking components may be located on the module, including the coupling circuits, with the power line input being routed directly to the module through a connector.

US Patent No. 6,989,734 to Thomas, entitled "Modulated data transfer between a system and its power supply" is directed towards a power supply that has power line networking capabilities either integrated within the power supply or added to it as a module. The module can be installed into or onto a power supply designed to accept such a power line networking module. The invention is also directed towards a method for transferring network data between the power supply and system which uses the power supply without any additional cables by modulating the data over the power output of the power supply with a modulator/demodulator both in the power supply and in the host system. Accordingly, a power line networking enabled power supply can be installed into a system by connecting only the power supply output cables to the system. Using modulation techniques, the networking data can flow between the power supply and system over the power cables that also deliver conditioned power to the system. This invention applies to internal power supplies as may be found in personal computers, such as desktops and tower systems as well as external power supplies as may be used with notebook computers, printers and the like. For internal power supplies, this invention eliminates the need for a separate data connection between the power supply and main circuit card, thus reducing cost and clutter while increasing reliability. For external power supplies, this invention eliminates the need for a long data cable between the power supply and the system, also reducing cost and clutter while improving reliability. Furthermore, this invention does not require a separate data connector on the system, e.g., a notebook or a printer.

US Patent No. 6,999,505 to Yokoo, et al., entitled "Power line communication modem capable of simultaneously supplying power and exchanging data" is directed towards a power line communication (PLC) modem which includes a rectification circuit for converting an AC power source to a DC power source. The PLC modem also includes a modem circuit to which a DC voltage is supplied to from the rectification circuit and a universal serial bus (herein abbreviated USB) connector connected to the modem circuit. The PLC modem further includes a signal overlapping circuit for overlapping a signal processed by the modem circuit with the AC power source, wherein the DC voltage is supplied to the USB connector. A case for accommodating the rectification circuit, the modem circuit and the signal overlapping circuit is provided with the USB connector being fitted to the case. AC power is supplied to the PLC modem from a socket inside a home, with the PLC modem being connected to the information processing unit.

US Patent Application Publication No. 2006/0020354 A1 to Lorkovic, entitled "Digital home audio system" is directed towards a home theater personal computer system. The system is a combination audio control and audio transport system for sound output from a computer to speaker system elements. The system uses the existing building power lines to transport digital audio to speaker system elements. Each element is a standalone combination of a home power line digital signal transceiver, digital amplifier and at least one actual speaker in a single unit. In general, each speaker element covers only a single sound aspect such as High, Mid, or Low frequencies. The speaker elements are daisy chained electrically, and mechanically locked to each other as desired to build any size speaker unit at a given location. The computer receives registration of the elements by scanning the network and the user configures the plug location elements to respond to an audio channel. The personal computer system is equipped with a power line network adaptor built into the power supply of the computer system or a power line network adaptor and power supply connection and mounting system.

### SUMMARY OF THE PRESENT DISCLOSED TECHNIQUE

It is an object of the disclosed technique to provide a novel method and system for providing various networking functions using power lines which overcomes the disadvantages of the prior art. In accordance with the disclosed technique, there is thus provided a power supply, installed within a computer, for enabling signals to be transmitted and received between the computer and at least one electrical device external to the power supply. The power supply includes an electrical interface, at least one power cable, a low pass filter, a power line modem, an AC to DC converter and a DC to DC converter. The low pass filter is coupled with the electrical interface via a first one of the at least one power cable. The power line modem is coupled with the first one of the at least one power cable via a second one of the at least one power cable and with a motherboard of the computer. The AC to DC converter is coupled with the low pass filter and the DC to DC converter is coupled with the AC to DC converter, the power line modem and the motherboard. The electrical interface is for coupling the power supply with an electrical socket and for receiving high voltage AC electricity. The power line modem is for modulating and demodulating over power lines the signals to be transmitted and received between the computer and the at least one electrical device. The AC to DC converter is for transforming the high voltage AC electricity to DC electricity and the DC to DC converter is for converting the DC electricity to low voltage DC electricity and for powering the power line modem. The low pass filter is for substantially eliminating noise on the first one of the at least one power cable and the second one of the at least one power cable caused by the AC to DC converter and the DC to DC converter.

According to another aspect of the disclosed technique, there is thus provided a self-configuring power line modem, installed within a power supply, the self-configuring power line modem coupled with at least one network interface. The self-configuring power line modem includes a flash memory, which is coupled with the self-configuring power line modem. The flash memory is for storing at least one driver for the self-configuring power line modem and for automatically loading the stored at least one driver to the at least one network interface. The self-configuring power line modem provides broadband over power lines (BPL) and automatically upgrades at least one firmware for itself by downloading and installing the at least one firmware using the BPL automatically.

According to a further aspect of the disclosed technique, there is thus provided a power supply, installed within a computer. The power supply includes a power line modem and at least one network interface. The at least one network interface is coupled with the power line modem. The power line modem is for providing broadband over power lines (BPL) and the at least one network interface is for coupling the power line modem with a gateway. The gateway provides the BPL from the power line modem to at least one device coupled with the gateway.

According to another aspect of the disclosed technique, there is thus provided a network layer power line modem. The network layer power line modem includes a RAM unit, at least one line driver, a transformer, an analog hybrid circuit and a processor. The RAM unit is for running a plurality of processes required by the network layer power line modem. The at least one line driver is for amplifying signals to be transmitted over power lines by the network layer power line modem. The transformer is for isolating high voltage AC electricity received by the network layer power line modem. The analog hybrid circuit is for coupling at least one transmitting line and at least one receiving line in the network layer power line modem with at least one power cable. The processor is for handling layer 3 functions in the network layer power line modem and for running an IP stack on the network layer power line modem.

According to a further aspect of the disclosed technique, there is thus provided a networking system for coupling at least one USB device with a computer via power lines. The networking system includes a power supply and a power line router. The power supply is installed within the computer. The power supply includes an electrical interface, at least one power cable, a low pass filter, a power line modem, an AC to DC converter and a DC to DC converter. The power line router is coupled with the at least one USB device. The low pass filter is coupled with the electrical interface via a first one of the at least one power cable. The power line modem is coupled with the first one of the at least one power cable via a second one of the at least one power cable and with a motherboard of the computer. The AC to DC converter is coupled with the low pass filter and the DC to DC converter is coupled with the AC to DC converter, the power line modem and the motherboard. The electrical interface is for coupling the power supply with an electrical socket and for receiving high voltage AC electricity. The power line modem is for modulating and demodulating signals to be transmitted and received over the power lines between the computer and the at least one USB device. The AC to DC converter is for transforming the high voltage AC electricity to DC electricity. The DC to DC converter is for converting the DC electricity to low voltage DC electricity and for powering the power line modem. The power line router is not directly coupled with the computer and transfers signals from the at least one USB device over the power lines to the power supply. The power line modem receives and provides the signals transferred from the power line router to the motherboard, thereby enabling the at least one USB device to be coupled with the computer via the power lines.

According to another aspect of the disclosed technique, there is thus provided a power consumption manager, for managing at least one power consumption level of a respective at least one electrical device in a residence. The residence includes a plurality of electrical sockets. The at least one electrical device is coupled with a first one of the plurality of electrical sockets. The power consumption manager includes a computer and the computer includes a power supply. The power supply includes an electrical interface, at least one power cable, a low pass filter, a power line modem, an AC to DC converter and a DC to DC converter. The low pass filter is coupled with the electrical interface via a first one of the at least one power cable. The power line modem is coupled with the first one of the at least one power cable via a second one of the at least one power cable and with a motherboard of the computer. The AC to DC converter is coupled with the low pass filter and the DC to DC converter is coupled with the AC to DC converter, the power line modem and the motherboard.

The electrical interface is for coupling the power supply with a second one of the plurality of electrical sockets and for receiving high voltage AC electricity. The power line modem is for modulating and demodulating signals to be transmitted and received over power lines. The AC to DC converter is for transforming the high voltage AC electricity to DC electricity. The DC to DC converter is for converting the DC electricity to low voltage DC electricity and for powering the power line modem. The computer receives a plurality of measurements of the at least one power consumption level over the power lines via the power line modem. The computer manages the respective at least one electrical device via at least one control signal provided to the respective at least one electrical device over the power lines via the power line modem according to the received plurality of measurements of the at least one power consumption level.

### BRIEF DESCRIPTION OF THE DRAWINGS

The disclosed technique will be understood and appreciated more fully from the following detailed description taken in conjunction with the drawings in which:
Figure 1 is a schematic illustration of a system, constructed and operative in accordance with an embodiment of the disclosed technique; and
Figure 2 is a schematic illustration of the power supply of the system of Figure 1, constructed and operative in accordance with another embodiment of the disclosed technique.

### DETAILED DESCRIPTION OF THE EMBODIMENTS

The disclosed technique overcomes the disadvantages of the prior art by providing a novel power supply architecture capable of providing various networking functions using power lines. In general, networking in a computing environment refers to the systems and methods used to connect computers and devices together, such as printers, faxes, telephones, televisions and the like, such that devices can communicate with one another and share resources and information. It is noted that throughout the description, the term 'PC' or 'computer' is used to denote an element on a network, although the term PC or computer is not limiting and can refer to any type of electrical device which can be connected to a network, such as printers, faxes, stereo systems, household appliances, and the like. The terms PC or computer also include monitor screens, LCD screens, TV sets, any type of screen device and other electrical devices like smart meters (e.g., power consumption meters), smart sensors, control devices (e.g., on/off switches) and the like. Also the term 'residence' as used in the description can refer to a residential home, business, office building and the like.

Various mediums are in use for physically enabling computers on a network to be connected, for example, optical fibers, Ethernet cabling, infrared signals, radio waves, phone lines, coaxial cables and power lines. Computers on a network usually require appropriate hardware to be physically installed in order to enable the communication between elements on the network. For example, computers networked using Ethernet cabling usually require an Ethernet card to be installed on the motherboard of the computer, with the Ethernet card having a port to which Ethernet cabling can be coupled with. Alternatively, the motherboard of the computer may have an Ethernet chip installed on it (referred to in the art as an onboard component), also having a port to which Ethernet cabling can be coupled with. Other onboard connectors may be available on the motherboard for connecting the computer to a network, such as a USB port. Computers which are networked wirelessly (e.g., infrared signals and radio waves) require transceiver cards or devices to be physically coupled with the computers to enable signals from one computer on the network to be transmitted and received by another computer on the network wirelessly. As mentioned above, such devices may also be installed as onboard components on the motherboard of the computer.

Computers networked via power lines usually require a device, such as a modem, to be coupled with each computer on the network. The device, such as a modem, is designed to enable computer signals, or data, to be transmitted and received over power lines. Such devices can be referred to as power line devices, such as a power line modem, a power line router, a power line switch and the like. Power line devices modulate computer signals over standard high voltage power lines, such as 100-120 volt (herein abbreviated V) or 220-240 V power lines, which are used to provide electricity to residences and buildings.

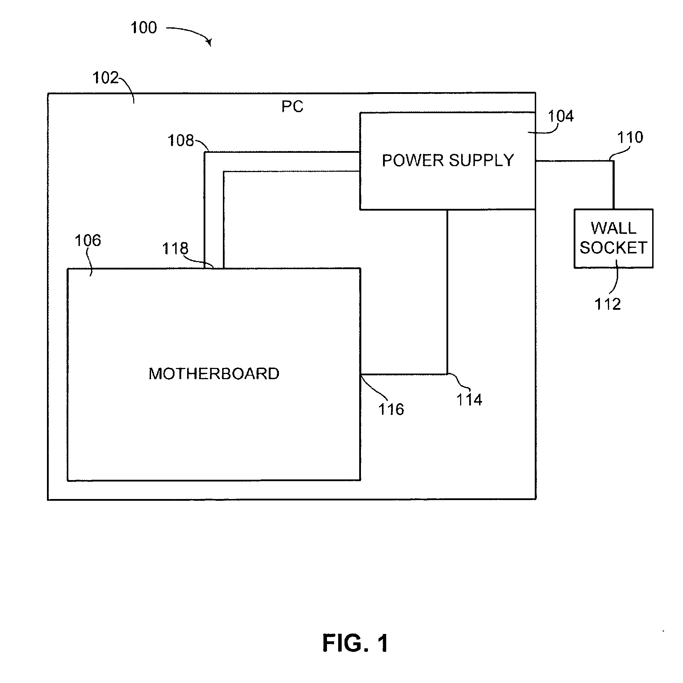

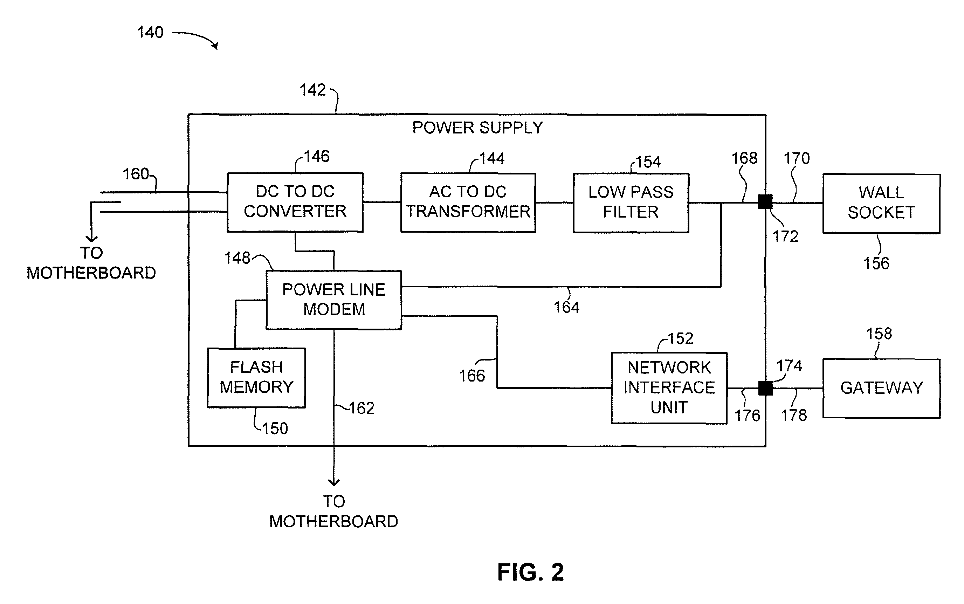

Reference is now made to Figure 1, which is a schematic illustration of a system, generally referenced 100, constructed and operative in accordance with an embodiment of the disclosed technique. System 100 includes a PC 102, which includes a power supply 104, a motherboard 106, a power cabling 108 and a data network cable 114. PC 102 includes other standard components found in a computer, such as a hard drive (not shown), various ports (all not shown) and a fan (not shown). For the purposes of clarity, these components are not shown in Figure 1. It is noted that PC 102 can be a desktop computer, a laptop computer, a personal digital assistant (herein abbreviated PDA), a media center, a mainframe computer, a monitor screen, an LCD screen, plasma screens, TV sets and the like. Power supply 104 is coupled with motherboard 106 using power cabling 108 and data network cable 114, as explained below. Power supply 104 is coupled with a wall socket 112 using a power cable 110. Power supply 104 is also coupled with the other standard components found in a computer (not shown). Wall socket 112 provides power supply 104 with high voltage electricity. As explained in more detail in Figure 2 below, power supply 104 converts the high voltage, alternating current (herein abbreviated AC) electricity coming from wall socket 112, to low voltage, direct current (herein abbreviated DC) electricity which is provided to motherboard 106 using power cabling 108. In general, many components in a computer and on the motherboard of a computer require low voltage DC electricity to operate. Standard low voltages used for computer components, such as hard drives, fans, and components on the motherboard, such as the central processing unit (herein abbreviated CPU), include 12 V, 5 V and 3.3 V.

Power cabling 108 may be a single power cable or a plurality of power cables. Power cabling 108 is coupled with motherboard 106 at a connection point 118. Connection point 118 can be any standard power connector on motherboard 106 for receiving low voltage DC electricity, such as a 20-pin or 40-pin P1 connector or a 4-pin P4 connector. For power line networking, motherboard 106 requires a direct connection to the high voltage AC electricity coming from wall socket 112 to transmit and receive computer signals. As shown in greater detail in Figure 2, power supply 104 includes a power line device, such as a power line modem (not shown) for modulating computer signals over power lines in a residence operating at a high voltage AC. The power line device (not shown) in power supply 104 is coupled with motherboard 106 via data network cable 114, which is coupled with motherboard 106 at a connection point 116. Connection point 116 and data network cable 114 can be any standard interface for coupling components in a computer. For example, data network cable 114 can be a USB cable, an Ethernet cable, a PCI local bus cable, a PCIe cable, an IEEE 1394 interface cable or any variety of media independent interface (herein abbreviated MII) cables, such as an xMII cable, with connection point 116 being respectively a USB port, an Ethernet port, a PCI local bus port, a PCIe port, an IEEE 1394 interface port or any variety of MII ports, such as an xMII port. In another embodiment of system 100, the power line device (not shown) in power supply 104 can be coupled with motherboard 106 wirelessly using infrared signals and radio waves. Power line networking and networking capabilities are enabled, according to the disclosed technique, by coupling motherboard 106, either directly or indirectly, to wall socket 112 via data network cable 114 and the power line device (not shown) in power supply 104.

Reference is now made to Figure 2, which is a schematic illustration of the power supply of the system of Figure 1, generally referenced 140, constructed and operative in accordance with another embodiment of the disclosed technique. Power supply 140 is substantially similar to power supply 104 (Figure 1). Power supply 140 includes a casing 142, an AC to DC transformer 144, a DC to DC converter 146, a power line modem 148, a flash memory 150, a network interface unit 152, a low pass filter 154, a power cabling 160, a data network cable 162, an electrical interface 172 and a network interface 174. AC to DC transformer 144 can also be referred to as an AC to DC converter. AC to DC transformer 144 is coupled with low pass filter 154 and DC to DC converter 146. Low pass filter 154 is coupled with electrical interface 172. A power cable 168 couples low pass filter 154 to electrical interface 172. Power line modem 148 is coupled with DC to DC converter 146, flash memory 150, network interface unit 152 and power cable 168. Power line modem 148 is coupled with power cable 168 via a power line cable 164. Power line modem 148 is coupled with network interface unit 152 via a network interface data cable 166. Power line modem 148 is also coupled with a motherboard (not shown) via data network cable 162. The motherboard may be, for example, motherboard 106 (Figure 1). Data network cable 162 is substantially similar to data network cable 114 (Figure 1). Network interface unit 152 is coupled with network interface 174 via a network cable 176. DC to DC converter 146 is coupled with the motherboard via power cabling 160. Power cabling 160 is substantially similar to power cabling 108 (Figure 1). Network interface unit 152 can be a switch, for example. Power supply 140 is coupled with a wall socket 156 via a power cable 170, which couples with electrical interface 172. A gateway 158 is coupled with power supply 140 via network cable 178, which couples with network interface 174. It is noted that flash memory 150, network interface data cable 166, network interface unit 152, network cable 176, network interface 174, network cable 178 and gateway 158 are optional components in power supply 140. It is also noted that DC to DC converter 146 may be optionally coupled with network interface unit 152 and flash memory 150 directly.

Electrical interface 172 is a standard interface for connecting power supply 140 to wall socket 156 for receiving high voltage AC electricity. Electrical interface 172 may be a pass through interface, the pass through interface including a power socket and a filter, that enables electrical devices other than power supply 140 to use wall socket 156, i.e., the pass through interface enables devices other than the power supply to use the same wall socket the power supply is coupled with. In such a case, electrical interface 172 may include a pass through filter (not shown) which attenuates any noise or interference introduced by other electrical devices on power cables 168 and 170. Power cable 168 provides the high voltage AC electricity to low pass filter 154 and to power line modem 148. High voltage AC electricity is provided to power line modem 148 via power line cable 164. As described below, in an embodiment in which an external line driver and a transformer are coupled with power line modem 148 along power cable 164, the high voltage AC electricity provided by power cable 168 may be attenuated by the transformer on power cable 164, for example if it's ratio of turns is not 1:1, before being provided to power line modem 148. Low pass filter 154 provides the high voltage AC electricity to AC to DC transformer 144, which transforms, or converts, the high voltage AC electricity to high voltage, or low voltage, DC electricity, for example, from 110 V AC to 110 V DC or from 110 V AC to 12 V DC. AC to DC transformer 144 may include a standard diode bridge or bridge rectifier. It is noted that the electricity provided from low pass filter 154 to AC to DC transformer 144 is not filtered, i.e., all signals provided to low pass filter 154 from wall socket 156 are provided unfiltered to AC to DC transformer 144. AC to DC transformer 144 provides the high voltage DC electricity to DC to DC converter 146. DC to DC converter 146 can be any type of step-down converter which converts high voltage DC electricity to low voltage DC electricity. For example, DC to DC converter 146 converts the high voltage DC electricity it receives to low voltage DC electricity, such as 12 V, 5 V and 3.3 V. DC to DC converter 146 then transfers the low voltage DC electricity to a motherboard (not shown) via power cabling 160. As mentioned in Figure 1, power cabling 160 may be a single power cable or a plurality of power cables. DC to DC converter 146 also provides the low voltage DC electricity to other components in a computer such as a hard disk (not shown), a floppy drive (not shown) or a fan (not shown).

DC to DC converter 146 also provides low voltage DC electricity to power line modem 148 for powering it. It is noted that DC to DC converter 146 only provides low voltage DC electricity to power line modem 148; data is not transferred directly between DC to DC converter 146 and power line modem 148. In one embodiment of the disclosed technique (as shown), the electricity power line modem 148 receives from DC to DC converter 146 is also used to power flash memory 150 and network interface unit 152. In another embodiment of the disclosed technique (not shown), in which DC to DC converter 146 is coupled directly with power line modem 148, flash memory 150 and network interface unit 152, DC to DC converter 146 provides low voltage DC electricity directly to power each of power line modem 148, flash memory 150 and network interface unit 152. Power line modem 148 is a power line device which enables computer signals to be transmitted and received over power lines. Power line modem 148 may include a RAM unit (not shown), for running processes required of power line modem 148, at least one line driver (not shown), for amplifying signals transmitted from power line modem 148, a transformer (not shown) for isolating high voltage signals received on power cable 164 and an analog hybrid circuit (not shown), for coupling the transmitting and receiving lines (not shown) in power line modem 148 to power cable 164, which is a single line. The RAM unit, at least one line driver, transformer and analog hybrid circuit are common components in power line modems. It is also noted that the RAM unit (not shown), transformer (not shown) and the at least one line driver (not shown) may be external to power line modem 148. In such a case, the RAM unit would be coupled with power line modem 148 and the at least one line driver (i.e., an external line driver) and the transformer (i.e., an external transformer) would be coupled along power cable 164, substantially coupling power line modem 148 with power cable 168 via power cable 164. It is noted that each one of the at least one line driver may be coupled with power cable 164 via the transformer (not shown). As mentioned above, this transformer may isolate the high voltage AC signals received from power cable 164 before providing them to power modem line 148. Power line modem 148 can use any standard protocol or specification for transferring computer signals over power lines, such as G.hn, HomePlug 1.0, HomePlug AV 1, HomePlug AV 2, UPA, HD-PLC, and protocols used in smart grid and smart energy related devices. Computer signals, i.e., data, sent from the motherboard (not shown) to power line modem 148 via data network cable 162, are modulated in power line modem 148 and transferred to power cables 168 and 170 via power line cable 164. Power line cable 164 is used for transferring data to and from power line modem 148 to wall socket 156. The data is then provided to wall socket 156. In this respect, data from the motherboard is provided directly to high voltage AC electricity and is not transferred to low voltage DC electricity which would then need to be transformed to high voltage AC electricity. Power line modem 148 can be embodied in casing 142 as a chip. The chip may use a few watts of power. Data transmitted by another power line modem (not shown) is transferred from wall socket 156 to power cable 168, which provides the signal to low pass filter 154 and to power line modem 148. In this respect, power line modem 148 is always using high voltage AC electricity for transmitting and receiving computer signals over power lines. The signal arriving at power line modem 148 is demodulated and either provided to the motherboard or to network interface unit 152 for further processing. The signal arriving at power line modem 148 may be attenuated by at least one transformer or other devices for attenuating signals (not shown) included in power line modem 148 or by at least one transformer (not shown) external to power line modem 148. The signal arriving at low pass filter 154 is eventually transformed and converted and used for powering various components in power supply 142 and in the computer in which power supply 142 is coupled with.

In general, protocols and specifications for transferring data over power lines specify the frequencies, or range of frequencies, at which data can be transferred. For example, the range of frequencies could be 2-30 megahertz (herein abbreviated MHz), as specified in the HomePlug AV specification, or 2-100 MHz, as specified in the G.hn specification. As power supply 140 includes elements which are used to convert current and voltage (i.e., AC to DC transformer 144 and DC to DC converter 146), data transferred over power lines using power supply 140 are susceptible to interference as these elements cause noise and interference in power supply 140, especially to power line modem 148. This noise can be referred to as switching noise and can corrupt the data being transferred from power line modem 148 to electrical interface 172. Low pass filter 154 is used to filter out and substantially eliminate the noise and interference on power line cable 164 and power cable 168 caused by AC to DC transformer 144 and DC to DC converter 146. In this respect, data sent from power line modem 148 to wall socket 156 can be provided without additional noise in the data from AC to DC transformer 144 and DC to DC converter 146. Also, data arriving at wall socket 156 from another power line modem (not shown) provided to power line modem 148 via power line cable 164, can be provided without additional noise in the data from AC to DC transformer 144 and DC to DC converter 146.

Flash memory 150 includes at least one device driver for enabling power line modem 148 to communicate with the motherboard (not shown). It is noted that in one embodiment of the disclosed technique, flash memory 150 can be included in power line modem 148. In general, when a new hardware component is attached to a PC (not shown), the operating system of the PC requires a program which enables it to communicate with the new hardware device. Such programs are usually included with the software provided with a new hardware device or are found on the internet by the operating system and need to be downloaded and installed on the PC. According to the disclosed technique, power supply 140 is provided with flash memory 150 which includes at least one device driver. When the PC which includes power supply 140 is turned on for the first time, flash memory 150 provides the necessary driver, or software, to the motherboard (not shown) automatically via power line modem 148 using data network cable 162. A PC user is thereby obviated of the need to install the device driver. If power line modem 148 is used to provide BPL, meaning power line modem 148 provides internet access to the PC, then the PC can automatically download and install any updates of the device driver directly to flash memory 150 which can then provide the update to the motherboard automatically as described above. In this respect, the disclosed technique provides for a self-configured driver for a power line modem.

Network interface unit 152 enables power line modem 148 to couple with a network which is external to the PC or with devices which are external to the PC. Network interface unit 152 can be a switch capable of transferring data over Ethernet wires. Network interface unit 152 can also be a network bridge. Power line modem 148 can be coupled, via network interface unit 152, to an external gateway, such as gateway 158. Gateway 158 may be a router, a hub, a switch, or any other device capable of coupling the PC in which power supply 140 is installed in to at least one other device. As mentioned above, the at least one other device can be another computer, or an electrical device such as a stereo system, television, DVD player, microwave, refrigerator and the like. In this respect, power line modem 148 can provide, for example, internet access to other devices. If gateway 158 is a power line router, then power line modem 148 can provide internet access to devices coupled with gateway 158 if BPL service is provided to power line modem 148. Network interface 174 can be any known interface for coupling a PC with a gateway. For example, network interface 174 may be a USB interface, an Ethernet interface or a telephone jack interface. It is noted that if network interface unit 152 is a network bridge, then electrical devices, such as cameras, printers, televisions, stereos systems, and the like which include a USB interface can be coupled directly with power line modem 148 via network interface 174.

In many PCs, state of the art power supplies include a power saving function, commonly known as a sleep function, a sleep state, a soft-off state or a standby state. The power saving function operates by powering down the power supply when no electrical activity above a certain threshold is detected by the motherboard of the PC for a predetermined amount of time. When the power supply powers down, power is not provided to most of the components of the PC, although a minimal amount of energy is still provided to the motherboard to enable the PC to be 'woken up' when requested by a user. 'Waking up' a PC is essentially a command sent by the motherboard to the power supply to resume providing the necessary power for powering the components of the PC. According to one embodiment of the disclosed technique, power line modem 148 is provided with a power off override function, wherein if the power supply powers down due to a power saving function of the motherboard, the power required to operate power line modem 148 is still provided to it. In this embodiment, if power line modem 148 is providing internet access to other computers via gateway 158, then even if power supply 140 powers down, internet access can still be provided via gateway 158 to other computers since power line modem 148 will still receive the required power to operate from wall socket 156. Also, if power supply 140 is installed in a PC on a power line network, then power line modem 148 can act as a watchdog over the power line network, even if power supply 140 powers down, since power line modem 148 will still be provided with the power it requires to operate. In other words, power line modem 148 can provide connectivity to the network even if power supply 140 powers down.

According to another embodiment of the disclosed technique, a power off override function of power line modem 148 enables power line modem 148 to be remotely managed. For example, a user of a PC installed with power supply 140, located in a residence other than the residence where the PC is located, can access and configure power line modem 148 remotely, if power line modem 148 includes a software based management program, even if power supply 140 powers down. According to a further embodiment of the disclosed technique, a power off override function of power line modem 148 enables the PC in which power supply 140 is installed in to be remotely managed. For example, if power supply 140 powers down, then power line modem 148 can be sent a Wake-on-LAN or Wake-on-Ring signal remotely to wake up power supply 140 and hence wake up the PC. In addition, power line modem 148 can be sent a signal remotely to adjust the power usage of power supply 140, for example, to put power supply 140 in a sleep state.

Network devices in general are designed and constructed based on the OSI Seven Layer Model, which is an internationally accepted abstract description of network protocol design and network communication. Layer 3, known as the network layer, defines how data is transferred from a source location to a destination location via one or more networks. Layer 3 also represents a layer with management capabilities. In prior art systems, layer 3 is usually handled by a router, whereas layers 1 and 2, respectively the physical layer and data link layer, are handled by a modem, such as a power line modem or a network switch. According to another embodiment of the disclosed technique, besides handling layers 1 and 2, power line modem 148 can also handle the network layer, thereby obviating the need for a router in a network in which power line modem 148 is coupled with. In order to handle layer 3, according to the disclosed technique, power line modem 148 may require additional computing power to handle the management functions of layer 3. In one embodiment of the disclosed technique, power line modem 148 includes an additional processor (not shown) for handling the functions of layer 3. In this embodiment, the IP stack, which represents the software and protocols used for enabling network communication, may either run and be supported by power line modem 148 or may be external to power line modem 148 and run on the CPU on the motherboard of the computer to which power line modem 148 is coupled with. The latter is commonly where the IP stack is run. In general, the device in a computer which handles layer 3 requires direct access to the IP stack. In another embodiment of the disclosed technique, in order for power line modem 148 to handle layer 3 without the addition of another processor to power line modem 148, the IP stack is run on the processor (not shown) of power line modem 148, such that it has direct access to the IP stack. In addition, layer 3 handles routing and addressing which usually requires a frequent authentication or maintenance signal (i.e., a signal which identifies that a particular IP address is being used) to be transmitted, for example, every couple of minutes. Handling layer 3 in power line modem 148, rather than in a router, such as gateway 158, simplifies the tasks required of layer 3, since power line modem 148 can be assigned a permanent IP address. Furthermore, handling layer 3 in power line modem 148 provides power line modem 148 with self-contained management features, including the ability to upgrade its own firmware automatically, thereby removing this responsibility from the CPU on the motherboard of the computer to which it is coupled with.

According to a further embodiment of the disclosed technique, power supply 140 can enable remote USB devices to be accessed from the PC wherein power supply 140 is installed. According to this embodiment of the disclosed technique, a USB device, such as a webcam, a scanner, a printer and the like, is coupled with a power line router (not shown). This power line router (not shown) is not directly connected with the PC wherein power supply 140 is installed. The USB device may be located in the same residence as the PC, or may be located in a different residence. Gateway 158 may be embodied as a power line router. According to the disclosed technique, signals from the USB device are transferred to the power line router (not shown) which then transfers them over the power lines of a residence to gateway 158, which then provides the signals to power line modem 148 via network interface unit 152. The signals are then transferred to the motherboard (not shown). In this respect, power supply 140 enables a USB device to be coupled with a PC over power lines in a residence as if the USB device were coupled directly with the PC.

According to another embodiment of the disclosed technique, if power supply 140 is installed in a home PC or in a mainframe computer in a residence then using appropriate software, the home PC or the mainframe computer can be used to monitor the power consumption of the residence, for example, the power consumption of devices coupled with wall sockets in the residence. Since power supply 140 enables data and computer signals to be transferred over power lines, using appropriate software and hardware interfaces, power supply 140 can be provided with the power consumption of each wall socket in the residence where electrical devices are plugged into. The power consumption in the residence can thus be monitored and a user can be notified via the home PC, for example, when a certain socket is using more electricity than it did over the past two weeks. In addition, using appropriate software and hardware interfaces, power supply 140, installed in a home PC for example, can be supplied with the temperature readings in various locations within a residence and can thus monitor the temperature in various locations within the residence. For example, a central air-conditioning unit in a residence may have temperature and humidity sensors in the various rooms in a residence where air-conditioning ducts are installed. Since the central air-conditioning unit is coupled with a wall socket, then using appropriate software and hardware interfaces, the readings of the various sensors transferred to the central air-conditioning unit can be transferred to the home PC via the power line modem in power supply 140. A user at the home PC can then monitor and control the temperature at various locations in the residence and substantially operate the central air-conditioning unit. For example, in the winter the user may set a function that increases the temperature in any room in the residence where the temperature drops below a predefined temperature. In the summer, the user may set a function that limits the amount of air-conditioning used per room if the power consumption of an air-conditioning unit in a given room, within a predefined time period (e.g., 12 hours), exceeds a predefined power consumption limit.

It will be appreciated by persons skilled in the art that the disclosed technique is not limited to what has been particularly shown and described hereinabove. Rather the scope of the disclosed technique is defined only by the claims, which follow.

## Claims

1. Power supply, installed within a computer, for enabling signals to be transmitted and received between said computer and at least one electrical device external to said power supply, said power supply comprising:
an electrical interface, for coupling said power supply with an electrical socket and for receiving high voltage AC electricity;
at least one power cable;
a low pass filter, coupled with said electrical interface via a first one of said at least one power cable;
a power line modem, coupled with said first one of said at least one power cable via a second one of said at least one power cable and with a motherboard of said computer, for modulating and demodulating over power lines said signals to be transmitted and received between said computer and said at least one electrical device;
an AC to DC converter, coupled with said low pass filter, for transforming said high voltage AC electricity to DC electricity; and
a DC to DC converter, coupled with said AC to DC converter, said power line modem and said motherboard, for converting said DC electricity to low voltage DC electricity and for powering said power line modem,
wherein said low pass filter is for substantially eliminating noise on said first one of said at least one power cable and said second one of said at least one power cable caused by said AC to DC converter and said DC to DC converter.

2. The power supply of claim 1, wherein said electrical interface is a pass through interface, said pass through interface comprising:
at least one socket, for enabling at least one other electrical device to be coupled with said electrical socket and
a pass through filter, for filtering interference introduced to said at least one power cable by said at least one other electrical device.

3. The power supply of claim 1, said power line modem comprising:
a RAM unit, for running a plurality of processes required by said power line modem;
at least one line driver, for amplifying, over power lines, said signals to be transmitted by said power line modem;
a transformer, for isolating said high voltage AC electricity received by said electrical interface and provided to said power line modem; and
an analog hybrid circuit, for coupling at least one transmitting line and at least one receiving line in said power line modem with said second one of said at least one power cable.

4. The power supply of claim 3, wherein said RAM unit, said at least one line driver and said transformer are external to said power line modem.

5. The power supply of claim 1, further comprising:
a casing, for encasing said power supply;
a flash memory, coupled with said power line modem;
a network interface unit, coupled with said power line modem, for enabling said power line modem to communicate with at least one device external to said computer;
a network interface, coupled with said network interface unit;
a gateway, coupled with said network interface, for coupling said at least one device external to said computer with said network interface unit; and
at least one network cable, for coupling said network interface with said gateway and said network interface unit,
wherein said network interface is for coupling said computer with said gateway.

6. The power supply of claim 5, wherein said at least one network cable is selected from the list consisting of:
Ethernet cable;
USB cable;
PCI local bus cable;
PCIe cable;
IEEE 1394 cable; and
MII cable.

7. The power supply of claim 5, said flash memory comprising at least one device driver for enabling said power line modem to communicate with said motherboard.

8. The power supply of claim 7, wherein said flash memory provides said at least one device driver to said motherboard automatically via said power line modem.

9. The power supply of claim 5, wherein said at least one device external to said computer comprises an external network.

10. The power supply of claim 5, wherein said network interface unit is a switch.

11. The power supply of claim 5, wherein said network interface unit is a network bridge.

12. The power supply of claim 5, wherein said gateway is selected from the list consisting of:
a router;
a hub;
a switch; and
a device capable of coupling said computer with said at least one device external to said computer.

13. The power supply of claim 5, wherein said gateway provides internet access to said at least one device external to said computer via said power line modem when broadband over power lines (BPL) is provided to said power line modem.

14. Self-configuring power line modem, installed within a power supply, said self-configuring power line modem coupled with at least one network interface, comprising:
a flash memory, coupled with said self-configuring power line modem, for storing at least one driver for said self-configuring power line modem and for automatically loading said stored at least one driver to said at least one network interface,
wherein said self-configuring power line modem provides broadband over power lines (BPL); and
wherein said self-configuring power line modem automatically upgrades at least one firmware for itself by downloading and installing said at least one firmware using said BPL automatically.

15. Power supply, installed within a computer, comprising:
a power line modem, for providing broadband over power lines (BPL); and
at least one network interface, coupled with said power line modem, for coupling said power line modem with a gateway,
wherein said gateway provides said BPL from said power line modem to at least one device coupled with said gateway.

16. The power supply of claim 15, wherein sufficient power to operate said power line modem is provided to said power line modem if said power supply powers down due to a power saving function of said computer.

17. The power supply of claim 16, wherein said power line modem provides said BPL to said gateway when said power supply powers down.

18. The power supply of claim 16, wherein said power line modem acts as a watchdog over said at least one device coupled with said gateway when said power supply powers down.

19. The power supply of claim 16, wherein said power line modem comprises a management program and wherein said power line modem is remotely managed by said management program accessed using said at least one device, even when said power supply powers down.

20. The power supply of claim 16, wherein said computer comprises a management program and wherein said computer is remotely managed by said management program accessed using said at least one device via said power line modem, even when said power supply powers down.

21. Network layer power line modem, comprising:
a RAM unit, for running a plurality of processes required by said network layer power line modem;
at least one line driver, for amplifying signals to be transmitted over power lines by said network layer power line modem;
a transformer, for isolating high voltage AC electricity received by said network layer power line modem;
an analog hybrid circuit, for coupling at least one transmitting line and at least one receiving line in said network layer power line modem with at least one power cable; and
a processor, for handling layer 3 functions in said network layer power line modem and for running an IP stack on said network layer power line modem.

22. The network layer power line modem of claim 21, wherein said network layer power line modem is assigned a permanent IP address.

23. Networking system, for coupling at least one USB device with a computer via power lines, said networking system comprising:
a power supply, installed within said computer, said power supply comprising:
an electrical interface, for coupling said power supply with an electrical socket and for receiving high voltage AC electricity;
at least one power cable;
a low pass filter, coupled with said electrical interface via a first one of said at least one power cable;
a power line modem, coupled with said first one of said at least one power cable via a second one of said at least one power cable and with a motherboard of said computer, for modulating and demodulating signals to be transmitted and received over said power lines between said computer and said at least one USB device;
an AC to DC converter, coupled with said low pass filter, for transforming said high voltage AC electricity to DC electricity; and
a DC to DC converter, coupled with said AC to DC converter, said power line modem and said motherboard, for converting said DC electricity to low voltage DC electricity and for powering said power line modem; and
a power line router, coupled with said at least one USB device,
wherein said power line router is not directly coupled with said computer;
wherein said power line router transfers signals from said at least one USB device over said power lines to said power supply; and
wherein said power line modem receives and provides said signals transferred from said power line router to said motherboard, thereby enabling said at least one USB device to be coupled with said computer via said power lines.

24. The networking system of claim 23, wherein said at least one USB device is a remote USB device.

25. Power consumption manager, for managing at least one power consumption level of a respective at least one electrical device in a residence, said residence comprising a plurality of electrical sockets, said at least one electrical device coupled with a first one of said plurality of electrical sockets, said power consumption manager comprising:
a computer, said computer comprising a power supply, said power supply comprising:
an electrical interface, for coupling said power supply with a second one of said plurality of electrical sockets and for receiving high voltage AC electricity;
at least one power cable;
a low pass filter, coupled with said electrical interface via a first one of said at least one power cable;
a power line modem, coupled with said first one of said at least one power cable via a second one of said at least one power cable and with a motherboard of said computer, for modulating and demodulating signals to be transmitted and received over power lines;
an AC to DC converter, coupled with said low pass filter, for transforming said high voltage AC electricity to DC electricity; and
a DC to DC converter, coupled with said AC to DC converter, said power line modem and said motherboard, for converting said DC electricity to low voltage DC electricity and for powering said power line modem,
wherein said computer receives a plurality of measurements of said at least one power consumption level over said power lines via said power line modem; and
wherein said computer manages said respective at least one electrical device via at least one control signal provided to said respective at least one electrical device over said power lines via said power line modem according to said received plurality of measurements of said at least one power consumption level.

26. The power consumption manager of claim 25, further comprising at least one temperature sensor, coupled with a first one of said respective at least one electrical device, for measuring temperature in at least one location in said residence.

27. The power consumption manager of claim 26, wherein said at least one temperature sensor provides a plurality of temperature measurements to said computer over said power lines via said power line modem and wherein said computer controls said first one of said respective at least one electrical device according to said plurality of temperature measurements.
